# EUROPÄISCHE PATENTSCHRIFT

(11) **EP 1 268 345 B1**
(45) Veröffentlichungstag und Bekanntmachung des Hinweises auf die Patenterteilung: **15.03.2006**
(21) Anmeldenummer: 01919415.8
(22) Anmeldetag: 31.03.2001
(51) Int. Cl.: C01B 33/36, C01B 39/46, C04B 35/63, C03C 8/14, C03C 1/00, C09D 7/12

(54) **SYNTHETISCHE ALUMINIUMSILIKATE MIT NEPHELIN- ODER CARNEGIETSTRUKTUR**
SYNTHETIC ALUMINOSILICATES COMPRISING A NEPHELINE OR CARNEGIEITE STRUCTURE
SILICATES D'ALUMINIUM SYNTHETIQUES A STRUCTURE DE TYPE NEPHELINE OU CARNEGIEITE

(30) Priorität: 05.04.2000 DE 10016884
(43) Veröffentlichungstag der Anmeldung: 02.01.2003
(73) Patentinhaber: Herold, Hans, 56410 Montabaur (DE)
(72) Erfinder: Herold, Hans, 56410 Montabaur (DE)
(74) Vertreter: Helbing, Jörg
(86) Internationale Anmeldenummer: PCT/EP2001/003701
(87) Internationale Veröffentlichungsnummer: WO 2001/077018

(56) Entgegenhaltungen:
- US-A- 4 279 963
- US-A- 5 961 943
- KOSANOVIC, CLEO ET AL: "Synthesis of ceramics from cation exchanged zeolite precursors" ADV. SCI. TECHNOL. (FAENZA, ITALY) (1999), 14(CERAMICS: GETTING INTO THE 2000'S, PT. B), 325-332 , 1999, XP001011443
- DONDUR V ET AL: "High temperature phase transformations of cation exchanged zeolites: a new route for synthesis of aluminosilicate materials" ADVANCED MATERIALS FOR HIGH TECHNOLOGY APPLICATIONS. FIRST YUGOSLAVIAN ADVANCED MATERIALS CONFERENCE, HERCEG-NOVI, YUGOSLAVIA, 18-22 SEPT. 1995, Bd. 214, Seiten 91-98, XP001011392 Materials Science Forum, 1996, Trans Tech Publications, Switzerland ISSN: 0255-5476

## Beschreibung

### Einleitung

Die Erfindung betrifft synthetische Aluminiumsilikate mit Nephelin- oder Carnegietstruktur, die eine verdickende Wirkung in wässrige Systemen von Suspensionen und Lösungen aufweisen. Die Erfindung betrifft weiterhin die Herstellung dieser synthetischen Aluminiumsilikate und deren Verwendung als Verdickungsmittel und Stell- und Thixotrophiermittel für keramische Massen, Glasuren und Emails. Schließlich werden noch Glasur- und Emailschlicker, keramische Massen, Farben und Pasten bereitgestellt, die die vorstehend genannten synthetischen Aluminiumsilikate enthalten.

### Hintergrund der Erfindung

Es gibt einige Gründe, um wäßrige Systeme von Suspensionen und Lösungen zu verdicken. Beispielsweise sind Zahnpasten, kosmetische Pasten, Geschirrspülmittel, wäßrige Farben und Beschichtungen (coatings), Klebstoffe, Glasur- und Emailschlicker, gegossene oder plastische keramische Massen Anwendungen, die eine gezielte Beeinflussung von Viskosität, Scherwiderstand und Fließgrenze erfordern. Der Emailschlicker ist ein durch Nassmahlung von granulierter Emailfritte und anderen Mühlenzusatzstoffen wie Quartz, Feldspat, Glasmehl, Ton und Elektrolyten hergestellter Emailbrei. Fritten sind durch Schmelzen und anschließendes Abschrecken erzeugte, glasige, granulierte oder schuppige Glasmenge, in denen wasserlösliche Salze wie Soda oder Borax silicatisch gebunden und damit in eine weitgehend wasserunlösliche Verbindung überführt wurden.

Ton und Elektrolyte verwendet man, um dem Schlicker eine auftragsfähige Konsistenz zu geben. Für den Emailauftrag durch Tauchen oder Spritzen wichtige rheologische Eigenschaften sind die Thixotrophie und der Anlaßwert oder Fließgrenze des Schlickers. Der Schlicker darf beim Auftrag auf eine senkrechte, nicht saugende Unterlage aus Metall, die abhängig vom verwendeten Verfahren auch grundemailliert sein kann, nicht abrutschen oder ablaufen. Da die metallische Unterlage beim Trocknen nicht schwindet, sollte der Emailschlicker eine geringe Trockenschwindung besitzen, um die Ausbildung von Trockenrissen zu vermeiden.

Der getrocknete Emailschlicker benötigt eine gewisse Beständigkeit gegen mechanische Beanspruchung durch Erschütterung und Abrieb, um das Werkstück weiter bearbeiten zu können.

Die kurze Brenndauer von 3 - 7 Minuten und die niedrige Brenntemperatur von 820 - 870 °C machen den Emailversatz empfindlich für die Anwesenheit bestimmter Verbindungen.

Sulfate, Chloride, Nitrate und Carbonate werden entweder im Glasfluß gelöst, was bei Sulfaten und Chloriden zu Oberflächenfehlern im Email führt oder sie spalten wie im Fall der Carbonate bei höheren Temperaturen Gase ab, die im Email Blasen und Krater verursachen können.

Ein Bedarf für synthetische rheologische Verdicker ergibt sich beim Email, da Ton als Naturprodukt in seiner chemischen und mineralogischen Zusammensetzung Schwankungen unterliegt, die Einfluß auf die Qualität des Emails haben. Beispielsweise führen schon geringe Mengen von Calziumcarbonat im Ton zu den o. a. Oberlfächenfehlern, die durch die Ausgasung bei hohen Temperaturen verursacht werden.

Weiterhin sind Tone immer durch relevante Anteile von mehr als 1 Gew.-% an Eisen und Titanverbindungen verunreinigt. Das Email wird durch diese Verbindungen gelblich oder grau gefärbt, was den maximal erreichbaren Weißgehalt des Emails reduziert. Weiterhin machen diese Fe- und Ti-Anteile den Versatz beim Brand empfindlich für eine zu lange Verweildauer im Ofen. Die Vergilbungsbeständigkeit sinkt mit zunehmendem Gehalt an eisen- und titanhaltigen Verunreinigungen.

Der Verwendung synthetischer organischer Verdicker werden Grenzen durch die Kürze der Brenndauer sowie die große Aufheizgeschwindigkeit gesetzt. Idealerweise sollte die Ausgasung aller flüchtigen Bestandteile beendet sein, bevor der Emailauftrag geschmolzen ist.

Anorganische synthetische Verdicker sind die hoch quellfähigen Magnesiumschichtsilikate, wie in DE-A-41 17 323 und DE-A-16 67 502 beschrieben. Wie die gemischten Metallhydroxide, beispielhaft beschrieben in EP-A-0 207 811, haben sie sich in Emailtechnik nicht als Ersatz für Ton durchsetzen können.

Weiterhin ist bekannt, dass ein Na-Zeolith A oder P durch Calzination oberhalb 800 °C in synthetischer Nephelin oder Carnegiet umgewandelt wird. Dieses Verfahren ist allgemein bekannt und gilt so auch für die Bausteine eines Zeolithen A, die Sodalithe. M. Murat, C. R. Acad. Sc. Paris, Ser. C. 272,1392(1971) beschreibt die Umwandlung eines Zeolithen 4A in folgender Weise:
Zeolith 4A → Amorpher Carnegiet → Kristalliner Carnegiet → Kristalliner Nephelin
Zu ergänzen ist, dass kristalliner Nephelin sich bei 1300 °C in kristallinem Carnegiet umwandelt.

US 5,298,234 der Mizusawa Industrial Chemicals Ltd., Japan beschreibt ein Aluminiumsilikat mit kubischer Form des Primärkorns, einer maximalen Größe 5 µm und einem Al₂O₃ : SiO₂ Molverhältnis von 1 : 1,8 bis 1 : 5. Röntgenologisch ist das Produkt amorph und wird mit einer BET Oberfläche kleiner 100 m²/g angegeben. Das Produkt wird durch die Behandlung eines Zeolithen 4 A durch Säure bei einem minimalen pH-Wert von 5 und anschließender Calzination oberhalbe 300 °C erhalten.

US 5,961,943 beschreibt ein regelmäßig geformtes Aluminiumsilikat zur Verwendung als mischbare Komponente in Polymeren und Oberflächenbeschichtungen, das möglichst geringe adsorbtive Eigenschaften anstrebt, insbesondere eine niedrige Hygroskopie (d. h. eine Feuchtigkeitsadsorbtion von kleiner als 1 %) und eine niedrige Ölzahl (kleiner 50 ml/100 g) aufweist. Es zeigt eine hohe Pigmentvolumenkonzentration, gute Dispergierbarkeit in Harzen sowie einen Brechungsindex der dem von PVC ähnlich ist. Es wird durch Calzination eines synthetischen A oder P-Type Zeoliths erhalten und besitzt eine Nephelin- oder Carnegiet-Kristallstruktur. Als weitere wesentliche Merkmale dieses Aluminiumsilikats werden eine regelmäßige Kornform mit einer durchschnittlichen Partikelgröße von 0,5 - 30 µm und mit einer engen Korngrößenverteilung (D75/D25 < 3), eine Mohs-Härte von < 6 und eine BET-spezifische Oberfläche von wenigstens 10 m²/g angegeben. Die geringe Hygroskopie der Aluminiumsilikate wird durch Umsetzung mit Stearinsäure erzielt, das zu einer Beschichtung des Aluminiumsilikats mit Stearaten führt. Bedingt durch eine relativ niedrige Calzinierungstemperatur und nur kurze Behandlungsdauer weisen die Aluminiumsilikate der US 5,961,943 jedoch einen recht hohen Gehalt an Natrium-Aluminium-Silikat-Hydraten auf, was sich in einem Glühverlust bei 1000 °C von 0,3 Gew.-% oder größer manifestiert.

In der US 5,961,943 wird nur ein wasserhaltiges System mit solchen Aluminiumsilikaten beschrieben, nämlich, dass solche Aluminiumsilikate als Füller eines kunstharzgebundenen Anstriches für Beton dienen können.

Überraschenderweise wurde gefunden, dass spezielle Aluminiumsilikate, die durch vollständige Calzination von Zeolithen oberhalb von 900 °C und nachfolgender Vermahlung auf eine Korngröße kleiner 4 µm, vorzugsweise auf eine Korngröße kleiner 2,5 µm, sehr gute Verdickungsmittel sind. Die Aluminiumsilikate weisen einen sehr geringen Kristallwassergehalt und eine negative Oberflächenladung, die durch bewegliche Kationen ausgeglichen wird, auf. Experimentell zeigte sich, dass etwa 0,1 mmol NaOH/g Nephelin in Lösung gehen und dass eine deutlich messbare Adsorbtionsfähigkeit besteht, die nach dem Ammoniumacetatverfahren bestimmt wurde. Der Nephelin ist also als Ionenaustauscher zu bezeichnen.

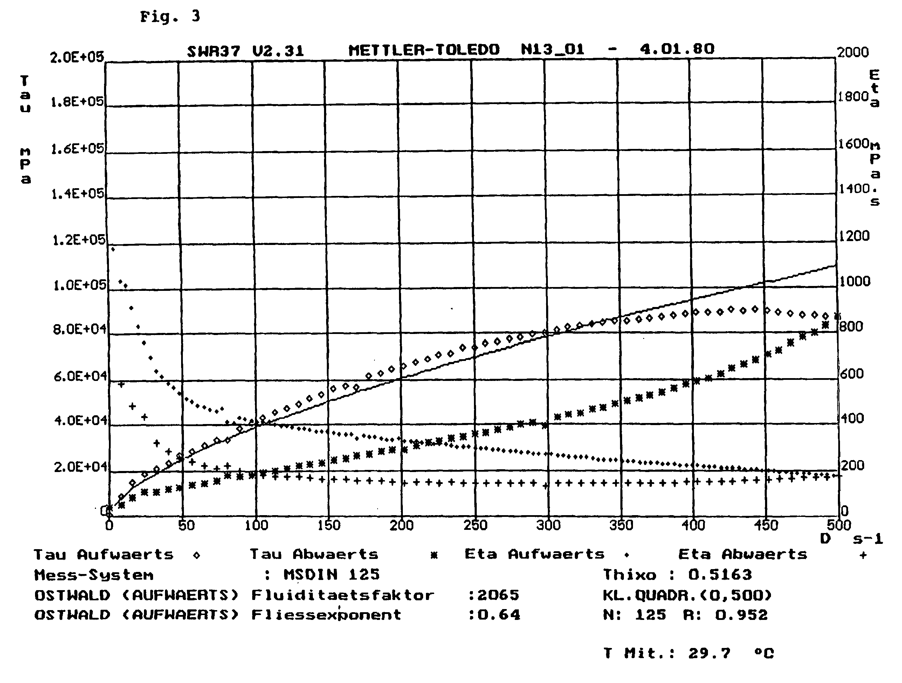

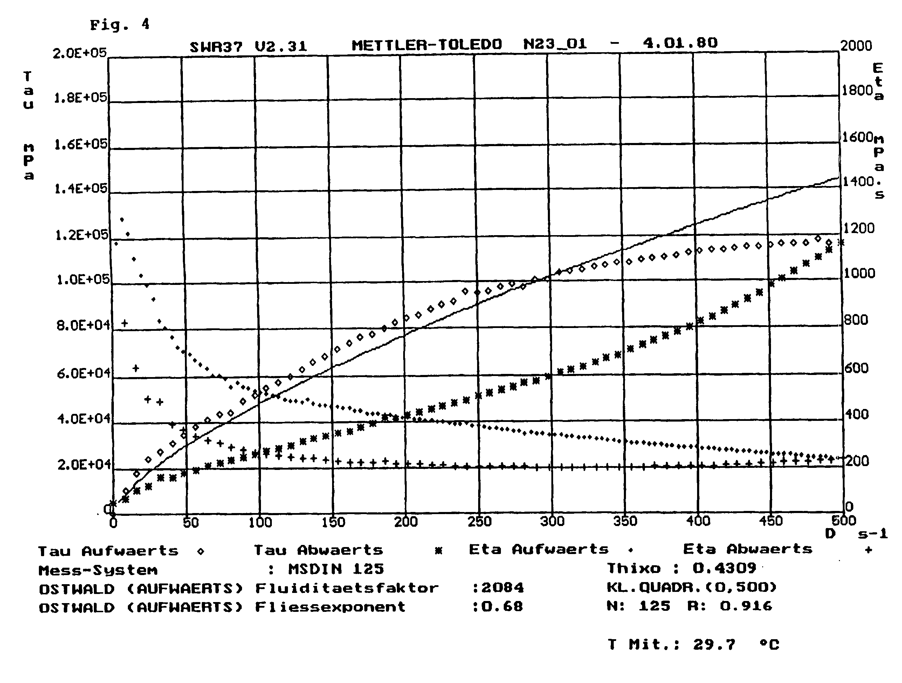

Durch Vermahlung wird die kolloidchemisch (äußere) wirksame Oberfläche an der Korngrenze vergrößert, was durch die Bestimmung der Korngrößenverteilung nachgewiesen werden könnte. Die Vergrößerung dieser Oberfläche zeigte eine gute Korrelation zur Wirksamkeit der erfindungsgemäßen Nepheline als Stell- und Verdickungsmittel. Die rotationsviskosimetrischen Auswertungen von Beispiel 7 und 8 (s. auch Fig. 3 und 4) zeigen klar die Erhöhung von Scherspannung und Viskosität bei Verwendung des feinkörnigeren Nephelins N2 anstelle von N1. Die reine Zugabe des Nephelins zur Suspension wirkt zunächst wegen des in Lösung gehenden NaOH verflüssigend. Erst die Zugabe geeigneter Elektrolyte bewirkt über eine Ionenaustauschreaktion eine Belegung der wirksamen Oberfläche mit anderen Ionen als Natrium. Sind diese Ionen z. B. Mg- oder Ca-Ionen, bewirkt dies eine dünnere elektrische Doppelschicht um die Nepehlinteilchen und diese sind in der Lage miteinander Gerüst- oder Kettenstrukturen zu bilden. Suspensionen können auf diese Weise eingedickt und über längere Zeiträume gegne Phasenseparation geschützt werden.

Die synthetischen Aluminiumsilikate dieser Erfindung eignen sich durch ihre rheologischen Eigenschaften als Stabilisatoren oder Verdicker für die oben aufgeführten wäßrigen Systeme. Speziell für Emaillierungen und Glasuren sind ihre niedrigen Fe- und Ti-Gehalte und die Abwesenheit von gasabspaltenden Verbindungen (d. h. ein niedriger Kristallgehalt bzw. niedriger Glühverlust) im Vergleich mit natürlichen Tonen besonders vorteilhaft. Gegenüber natürlichen Mehrschichtsitikaten oder den synthetischen Mehrschichtsilikaten der o. a. Erfindungen unterscheiden sie sich durch geringes Quellvermögen und sehr geringe Trockenempfindlichkeit. Der rheologische Charakter der mit den Nephelinen eingedickten Suspensionen tendiert im allgemeinen mehr zu strukturviskosem als thixotrophem Fließverhalten, wobei prinzipiell ein niedrigerer Wasserbedarf als bei Verwendung von Schichtsilikaten besteht.

### Zusammenfassung der Erfindung

Die vorliegende Erfindung betrifft somit
(1) ein synthetisches Aluminiumsilikat mit im wesentlichen Carnegiet- oder Nephelinstruktur und mit einer Korngröße D50 von kleiner 4,0 µm, das eine Kationenaustauschkapazität von wenigstens 5 mval NH₄⁺ aufweist.
(2) in einer bevorzugten Ausführungsform von (1) weist das synthetische Aluminiumsilikat eine spezifische Oberfläche (BET) von kleiner 10 m²/g (falls die Kornform regelmäßig und annähernd kubisch oder kugelig ist) und/oder einen Glühverlust bein 1000 °C von kleiner 0,2 Gew.-% auf;
(3) ein Verfahren zur Herstellung des in (1) definierten synthetischen Aluminiumsilikats, umfassend
   (a) vollständiges Calzinieren der Ausgangszeolithe bei Temperaturen größer 900 °C und
   (b) Vermahlen der in Schritt (a) erhaltenen calzinierten Zeolithe auf Korngrößen D50 von kleiner als 4,0 µm;
(4) die Verwendung des in (1) oder (2) definierten synthetischen Aluminiumsilikats als Verdickungsmittel, Stell- oder Thixotrophiermittel; und
(5) Glasur- oder Emailschlicker, keramische Massen, Farben oder Pasten, enthaltend ein wie in (1) oder (2) definiertes synthetisches Aluminiumsilikat.

### Beschreibung der Figuren

Fig. 1 und 2 zeigen die Korngrößeverteilung der in Beispiel 1 und 5 erhaltenen vermahlenen Nepheline N1 und N2.
Fig. 3 und 4 zeigen die Fließkurven für Beispiel 7 (für N1) und für Beispiel 8 (für N2).

### Detaillierte Beschreibung der Erfindung

"Korngröße D50 kleiner als 4,0 µm" gemäß der vorliegenden Erfindung bedeutet, dass 50 Gew.-% eine Teilchengröße kleiner als 4,0 µm aufweisen. Bevorzugt sind insbesondere solche Aluminiumsilikate, die eine Korngröße D75 von kleiner 4,0 µm aufweisen.

"Aluminiumsilikate mit im wesentlicen Carnegiet- oder Nephelinstruktur" gemäß der Erfindung umfassen reine Carntegiet- und Nephelinstrukturen (bei Herstellung aus einem reinen Na-Zeolithen) sowie Aluminiumsilikate der Feldspatreihe, enthaltend zusätzlich K-, Ca-, Mg- und/oder Ba-Ionen (bei vorherigem teilweise oder vollständigen Ionenaustausch des Ausgangs-Na-Zeolithen).

Gemäß der vorliegenden Erfindung werden synthetische Aluminiumsilikate mit Carnegiet- und Nephelinstruktur aus synthetischen Zeolithen vom Typ A oder P (d. h. aus Na-Zeolithen, hier insbesondere der Na-Zeolith 4A) hergestellt. Alternativ hierzu können die synthetischen Aluminiumsilikate mit Carnegiet- und Nephelinstruktur auch aus synthetischen Zeolithen anderer Typen als Typ A oder P wie z. B. solche, die aus der Gruppe der Blätter- und Faserzeolithe stammen wie z. B. Heulandit, Mordenit, Erionit und Offretit, und solchen Zeolithen, die nicht zur Gruppe der Na-Zeolithe gehören (z. B. Zeolithe, deren Kation Ca, Mg, Ba und/oder K ist) hergestellt werden.

Die synthetischen Aluminiumsilikate der vorliegenden Erfindung besitzen aufgrund ihrer Gerüststruktur eine durch bewegliche Kationen ausgeglichene negative Oberflächenladung und weisen aufgrund ihrer durch Vermahlung auf Korngrößen von D50 < 4 µm hergestellten großen äußeren Oberfläche Eigenschaften als Verdicker in wäßrigen Systemn von Suspensionen und Lösungen auf.

Das Kristall eines synthetischen Zeoliths zeigt an seiner Oberfläche wegen des isomorphen Ersatzes von SiO₄-Tetraedern durch AlO₄-Tetraeder negative Überschussladungen, die durch Kationen ausgeglichen werden. Die Kationen sind nicht fest ins Kristallgitter eingebaut, sonder teilweise beweglich und austauschbar gegen andere Kationen. Weiterhin zeigen die Kristallstrukturen von Zeolithen unterschiedlich geformte Hohlräume. Hohlräume und bewegliche Kationen an innerer und äußerer Oberfläche bringen dem Zeolith die Fähigkeit, eigene Kationen durch andere Moleküle zu ersetzen. Dies ist allgemein bekannt und bedingt die Tauglichkeit eines Zeoliths als Molekularsieb.

Es ist bekannt, dass Zeolith A oder P wird durch Calzination zwischen 800 und 1500 °C in Nephelin oder Carnegiet umgewandelt wird.

"Vollständiges Calzinieren im Sinne der vorliegenden Anmeldung erfordert jedoch, dass eine Calzinierungstemperatur von über 900 °C in dem gesamten Reaktionsansatz herrscht, und zwar für einen ausreichenden Zeitraum, der die gewünschte Umwandlung in die Nephelin- oder Camegietstruktur und die Abgabe des Kristallwassers, so dass der gewünschte niedrige Kristallwassergehalt (d. h. niedriger Glühverlust) des Aluminiumsilikats erzielt wird, ermöglicht. Der absolute Zeitbedarf hängt dabei von der absoluten Calzinierungstemperatur und dem Wassergehalt und der Art des Ausgangszeoliths ab und beträgt vorzugsweise wenigstens 3 h, besonders bevorzugt wenigstens 6 h. Die bevorzugte Calzinierungstemperatur liegt im Bereich von 950 und 1250 °C. Die Calzination kann im Kammerofen, Tunnelofen, Rollenofen oder Drehrohrofen erfolgen. Während der Calzination versintern kleinere und größere Primärteilchen des Zeoliths zu größeren Sekundärteilchen. Der Zeolith verliert seine Kristallstruktur und wird in Nephelin oder Carnegiet umgewandelt.

Diese Umwandlung verändern die α- und β-Zellen der Zeolithe. Das adsorbtiv in den Zellen gebundene Wasser wird irreversibel ausgetrieben. Durch die Entfernung von Adsorbtiv- und Hydratwasser erhält der Nephelin prinzipielle Eignung zur Verwendung in keramischen Glasuren und Massen sowie Emailschlickern, z. B. als Ersatz für natürlichen Nephelin.

Dispergiert man das calzinierte Produkt in Wasser zeigt sich durch die eintretende Erhöhung des pH-Wertes, dass nicht alle Kationen fest in das neu entstandene Kristallgitter eingebaut sind. Ein Teil dieser Kationen ist frei beweglich und austauschbar. Belässt man das Produkt im agglomerierten Zustand steigt der pH-Wert der einer 5%-Suspension im Verlauf von Tagen auf einen Wert von ca. 9,0 bis 11,0.

Stellt man durch Vermahlung des versinterten Produktes die ursprüngliche Konrgröße und Korngrößenverteilung der Primärkörner wieder her, zeigt sich, dass der pH-Wert der Lösung in wenigen Stunden aus den o. a. Wert steig, danach aber keine signifikante zeitliche Änderung mehr erfährt. Die o. a. zeitliche Änderung des pH-Wertes entspricht einem Verhalten, wie man es von Diffusionsprozessen kennt. Es ist davon auszugehen, dass die Quelle der in die Lösung diffundierenden Kationen nicht das Innere des Primärkorns, die ehemaligen α- und β-Zellen des Zeolithen A sind, sondern die Oberfläche des Primärkorns.

Die Vermahlung kann naß oder trocken erfolgen, wobei auch eine Vermahlung in situ als in Mischung mit anderen Komponenten benutzt werden kann. Eine Nassvermahlung vergrößert die Oberfläche des versinterten Nephelins und lässt adsorbtiv an der Oberfläche gebundenes Natriumionen in Lösung gehen. Mit dem auf diese Weise aktivierten Nephelin und geeigneten Elektrolyten lassen sich Feststoff/H₂O-Gemisch verdicken.

Die Kationenaustauschkapazität der (nach dem Ammoniumacetatverfahren) der synthetischen Aluminiumsilikate der vorliegenden Erfindung lässt sich mit den natürlichen Aluminiumsilikaten mit Einschichtmineraistruktur (kaolinitische Tone) vergleichen.

Durch Calzination und anschließende Vermahlung wird bevorzugt ein synthetisches Aluminiumsilikat (Nephelin/Carnegiet) mit folgenden Eigenschaften erzeugt:
1. Einen niedrigen Gehalt an Fe und Ti: Fe₂O₃ < 200 ppm, TiO₂ < 30 ppm.
2. Einen niedrigen Gehalt an Gasabspaltenden Verbindungen: Glühverlust bei 1000 °C < 0,1 %.
3. Eine geringe Korngröße: D50 kleiner als 4,0 µm (insbesondere D75 kleiner als 4 µm), vorzugsweise D50 kleiner als 3,0 µm (insbesonder D75 kleiner als 3,0µm), besonders bevorzugt D50 kleiner als 2,5 µm (insbesondere D75 kleiner als 2,5 µm), eine typische Korngrößenverteilung ist z. B. D25 = 1,4 µm, D50 = 2,3 µm, D75 = 3,7 µm, D100 = 10 µm.
4. Eine spezifische Oberfläche im Bereich der theoretisch - aufgrund der Korngröße - bestimmbaren Oberfläche, vorzugsweise eine Oberfläche (BET) von größer 1 m²/g, besonders bevorzugt von größer 3 m²/g und kleiner 5 m²/g (ein erfindungsgemäßes Nephelinpulver mit D75 kleiner 3 µm hat theoretisch eine spezifische Oberfläche von 3,4 m²/g nach dem BET-Verfahren. Eine spezifische Oberfläche, bestimmt nach BET (DIN66131/66132) von größer 1 m²/g liegt dann vor, wenn regelmäßige Kornformen (den Kubus für ein Material aus Zeolith 4A und die Kugelform für ein aus einem Zeolithen P hergestellten Nepehelin) vorliegen und die erzielte Oberfläche im Bereich der theoretisch zu kalkulierenden liegt. Diese Berechnung ist nur möglich, wenn die Geometrie der Körper bekannt ist.
   Ein Würfel mit einer Kantenlänge von 1 cm hat eine Oberfläche von 6 cm². Würfel mit Kantenlängen von 1 µm, die zusammen ein Volumen von 1 cm³ habe sollen, haben eine Oberfläche von 6 m². Nephelinwürfel mit einer Kantenlänge von 1 µm haben demnach eine Oberfläche von 2,31 m²/g bei einem spez. Gew. von 2,6 g/cm³ für Nepehlin (ein durch intensive Vermahlung gebrochenes, splittiges, stängeliges, plättchenförmiges, unregelmäßiges Nephelinpulver entzieht sich selbstverständlich dieser Betrachtungsweise).
5. Eine hohe negative Oberflächenladung: Kationenaustauschkapazität zwischen 5 und 100 mval NH₄⁺ (nach dem Ammoniumacetatverfahren).
6. Chemische Zusammensetzung: mindestens 5 und vorzugsweise mindestens 10 Gew.-% Al₂O₃, so z. B. eine Zusammensetzung, enthaltend 20 Gew.-% Na₂O, 35 Gew.-% Al₂O₃, 45 Gew.-% SiO₂.
7. pH-Wert (100 g Nephelin in 50 g H₂O): 12,0 - 13,0.

Darüber hinaus zeigt das erfindungsgemäße synthetische Aluminiumsilikat "plastische" Eigenschaften, d. h., es besitzt eine Fließ- und eine Ausrollgrenze, wenn mit Elektrolyten vorher eine Ionenaustauschreaktion durchgeführt wurde.

Mit dem aktivierten Nephelin oder Carnegiet und geeigneten Elektrolyten lassen sich Feststoff/H₂O-Gemische verdicken. Geeignete Elektrolyte sind Salze der ein- und zweiwertigen Alkalien und Erdalkalien sowie deren Hydroxide wie z. B. Natrium, Kalium, Rubidium, Cäsium, Magnesium, Calcium, Strontium, Barium. Als Säuren, die zur Salzbindung benötigt werden, sind Salz-, Schwefel-, Salpeter-, Kieselsäure und Aluminiumhydroxid als anorganische Komponenten bevorzugt. Geeignete organische Säuren sind Carbonsäuren wie Essig- und Ameisensäure und Kohlensäure. Bevorzugte Elektrolyte für emailtechnische Anwendungen sind Na-Aluminat, K₂CO₃ und Mg-Acetat. Für die Glasur wird MgCl₂ bevorzugt.

Die Galsur- und Emailschlicker, keramische Massen, Farben und Pasten gemäß der vorliegenden Erfindung enthalten die dem Fachmann auf dem entsprechenden Gebiet geläufigen üblichen Bestandteile sowie eine für die Einstellung der rheologischen Eigenschaften dieser Zusammensetzung benötigte Menge an den erfindungsgemäßen Aluminiumsilikaten und Elektrolyten. Bevorzugte Mengen an Aluminiumsilikaten und Elektrolyten liegen im Bereich von 0,1 bis 10, besonders bevorzugt im Bereich von 0,5 bis 5 Gew.-% der Trockenmasse. So bezeichnen keramische Massen die anorganischen Pulver nach ihrer Mischung vor der Formgebung. Ihre Zusammensetzung wird vom Verwendungszweck bestimmt, variiert demgemäß in weiten Grenzen. Die klassische Keramik umfasste hauptsächlich Stoffgemische von Tonen, Quarz und Feldspäten, wogegen die heutigen Oxidkeramiken bis 99,9 % eines Oxids, z. B. Al₂O₃, enthalten können.

Die Erfindung betrifft weiterhin noch die keramischen Erzeugnisse und auch die Verfahren zu ihrer Herstellung. Die Verfahrenstechnik umfasst die Aufbereitung von anorganischem Pulver, deren Mischung und Formgebung, eine Trocknung und den keramischen Brand oberhalb 800 °C, bei dem unter Ablauf von Sinter- und Schmelzerscheinungen das Produkt seine endgültige physikalischen und chemischen Eigenschaften erhält.

Weiterhin bedingen die aktiven Oberflächen der erfindungsgemäßen Pulver Ihre Eignung als Träger für katalytisch wirkende Substanzen, wenn diese für ihre Verbindung mit dem Untergrund eine negativ geladene Oberfläche benötigen.

Ein Farbkörper für den pulverelektrostatischen Emailauftrag lässt sich herstellen, indem man den Zeolithen einem Ionenaustausch mit einem färbenden Metall unterzieht (z. B. Co mittels Cobaltacetat), diesen calziniert und somit das Co fest im Wirtsgitter bindet. Der Farbkörper wird anschließend vermahlen und gewaschen. Seine Oberfläche ist immer noch elektronegativ und lässt sich mit den für den pulverelektrostatischen Auftrag benötigten organischen Substanzen beschichten (PVA, Silikone).

Die vorliegende Erfindung wird anhand der nachfolgenden Beispiele näher erläutert, die jedoch den Schutzbereich der Erfindung nicht einschränken.

### Beispiele

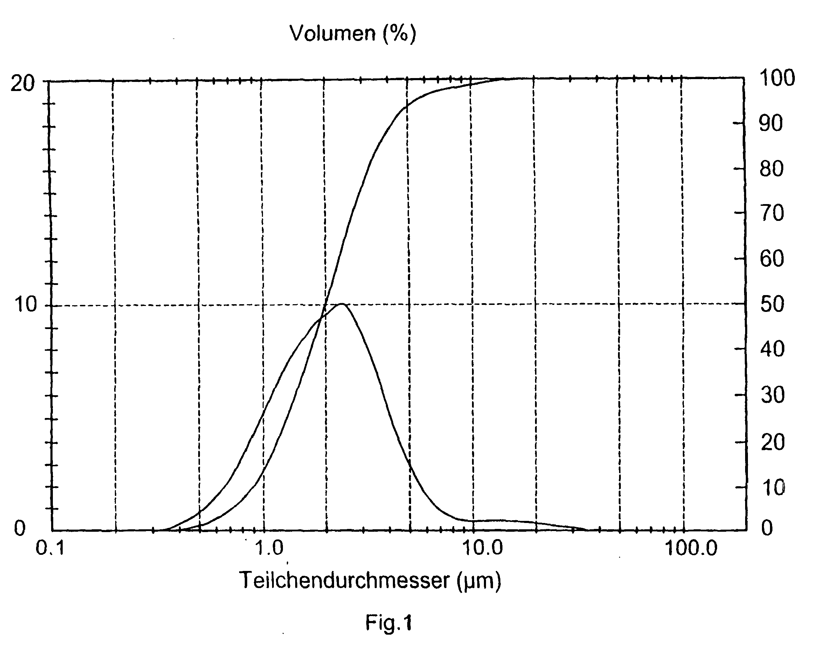

Beispiel 1: Nephelin N1 wird durch Calzination von Zeolith 4A (Zeoline S.A. Belgien) bei Temperaturen von oberhalb von 900 °C in einem elektrischen Herwagenofen (Naber W 1000) hergestellt. Die maximale Brenntemperatur (Tₘₐₓ) betrug 1120 °C, die Haltezeit bei Tₘₐₓ. betrug 10 h. Der Zeolith 4A ist angegeben mit 23 Gew.-% Na₂O, 36 Gew.-% Al₂O₃, 41 Gew.-% SiO₂, bezogen auf die Trockensubstanz sowie einer durchschnittlichen Korngröße von 2,7 µm. Der Nephelin zeigt nach Nassvermahlung auf einer Fliehkraftkugelmühle einen pH-Wert von 10,9 der 5 % Suspension in Wasser und eine Kationenaustauschkapazität von 44 mval NH₄⁺/100 g nach dem Ammoniumacetatverfahren und einem Glühverlust von 0,06 % bei 1000 °C Glühtemperatur.
Die spezifische Oberfläche dieses trocken unter Verwendung von 0,8 % Mahlhilfsmittel Aerosil 200 (spez. Oberfläche 200 m²/g) vermahlenen Nephelins wurde mit 3,5 m²/g nach BET (DIN 66131/66132) bestimmt, d. h. nach Abzug der Oberfläche des Aerosils Netto 1,9 m²/g.
Korngröße nach Mastersizer S long bed Ver. 2.19: 0,87 % < 0,5 µm/12,79 % < 1,00 µm/30,79 % < 1,50 µm/47,66 % < 2,00 µm/62,07 % < 2,50 µm/73,18 % < 3,00 µm /73,18 % < 4,00µm/92,13 % < 5,00 µm/94,81 % < 6,00 µm/100 % < 40 µm (siehe auch Fig. 1). Bei einer Dichte von 2,6 g/cm³ beträgt die rechnerische Oberfläche aus dieser Korngrößenverteilung 1,35 m²/g.

Beispiel 2: Der folgende Versatz zeigt die für einen Emailschlicker erforderlichen rheologischen Eigenschaften, wobei die Komponenten in Reihenfolge zugegeben werden. Einfaches Mischen ist ausreichend. Die Gelbildung setzt nach Zugabe von Mg-Acetat spontan ein.

| Bezeichnung | Massenteile |
|---|---|
| Quarzmehl W10 | 100 |
| Wasser | 37 |
| Nephelin N1 | 3 |
| Mg-Acetat | 0,2 |

Mg-Acetat kann durch gleiche Mengen an MgCl Ca-Acetat oder CaCl ersetzt werden.

Beispiel 3: Der folgende Versatz zeigt für ein Sanitäremail erforderliche chemische und physikalische Eigenschaften.

| Bezeichnung | Masseteile |
|---|---|
| Emailfritte W 7309 | 100 |
| (Bortitanweißfritte Fa. Kaldewei) | |
| Wasser | 37 |
| Nephelin N₁ | 3 |
| Mg-Acetat | 0,2 |

Zugabe von Mg-Acetat nach Nassvermahlung von Fritte und N1. Die Gelbildung setzt dann spontan ein.

Beispiel 4: Der folgende Versatz zeigt für ein Santäremail erfoderliche chemische und physikalische Eigenschaften.

| Bezeichnung | Masseteile |
|---|---|
| Emailfritte W 7308 | 100 |
| (Bortitanweißfritte Fa. Kaldewei) | |
| Wasser | 37 |
| Nephelin N₁ | 3 |
| NaAlO₂ | 0,2 |
| K₂CO₃ | 0,2 |

Zugabe aller Komponenten vor der Nassvermahlung. Die Gelbildung setzt im Verlauf von mehreren Stunden ein. Eine auftragsfähige Konsistenz ist nach ca. 10 h erreicht.

Beispiel 5: Ein Nephelin mit der Musternummer N₂ wird durch Calzination in einem elektrischen Kammerofen (Naber N20/H) oberhalb 900 °C aus einem Zeolith P der Crosfiled B.V. Niederlande hergestellt. Die maximale Brenntemperatur (Tₘₐₓ) betrug 1000 °C, die Haltezeit bei Tₘₐₓ 4 h. Dieser Zeolith Zeocros CG-180 wird angegeben mit 23 Gew.-% Na₂O, 35 Gew.-% Al₂O₃, 42 Gew.-% SiO₂, bezogen auf die Trockensubstanz sowie einer durchschnittlichen Korngröße von kleiner 0,9 µm.

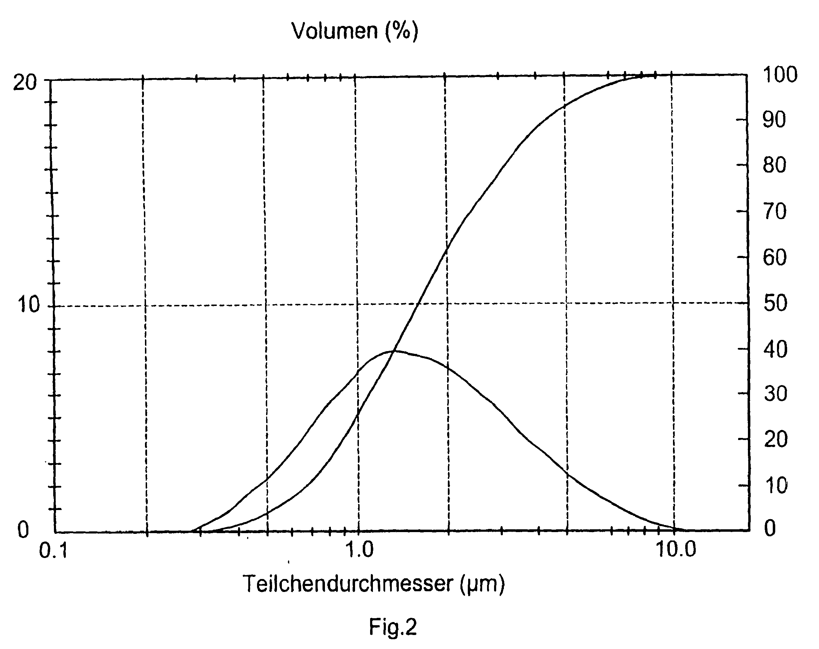

Der Nephelin zeigt nach Nassvermahlung auf einer Fliehkraftkugelmühle einen pH-Wert von 11,3 der 5%igen Suspension in Wasser, einen BET-Wert nach DIN 66131/66132 von 5,6 m²/g (nach Nassvermahlung auf 4,7 Vol.-% < 0,5 µm/26,2 % < 1,00 µm/46,42 % < 1,5 µm/60,95 %< 2,00 µm/71,15 % < 2,5 µm/78,41 % < 3 µm/83,53 % < 3,5 µm/87,17 % < 4 µm/91,82 % < 5 µm/94,57 % < 6 µm/100 % < 17 µm; bestimmt mit Mastersizer S long bed Ver. 2.19 (siehe auch Fig. 2) und einem Glühverlust von 0,08 % bei 1000 °C). Bei einer Dichte von 2,6 g/cm³ beträgt die rechnerische Oberfläche aus dieser Korngrößenverteilung 1,8 m²/g.

Beispiel 6: Die Versuche 2 - 4 werden in gleicher Weise mit 2 Massenteilen Nephelin N₂ anstelle von 3 Massenteilen Nephelin N₁ wiederholt und zeigten vergleichbare Resultate.

### Beispiel 7:

| Bezeichnung | Masseteile |
|---|---|
| Quarzmehl W 10 | 100,00 |
| Wasser | 38,00 |
| Nephelin N1 | 3,00 |
| Mg-Acetat | 0,20 |

Zugabe der Komponenten unter ständigem Mischen in der o. a. Reihenfolge. die rotationsviskosimetrische Auswertung (Fließkurve) ist in Fig. 3 gezeigt.

### Beispiel 8

| Bezeichnung | Masseteile |
|---|---|
| Quarzmehl W 10 | 100,00 |
| Wasser | 38,00 |
| Nephelin N2 | 3,00 |
| Mg-Acetat | 0,20 |

Zugabe der Komponenten unter ständigem Mischen in der o. a. Reihenfolge. Die rotationsviskosimetrische Auswertung (Fließkurve) ist in Fig. 4 gezeigt.

## Patentansprüche

1. Synthetisches Aluminiumsilikat mit im wesentlichen Carnegiet- oder Nephelinstruktur mit einer Korngröße D50 von kleiner 4,0 µm, das eine Kationenaustauschkapazität von wenigstens 5 mval NH₄⁺ aufweist.

2. Synthetisches Aluminiumsilikat gemäß Anspruch 1, das eine regelmäßige Kornform und eine spezifische Oberfläche (BET) von kleiner 10 m²/g, vorzugsweise von kleiner 5,0 m²/g aufweist.

3. Synthetisches Aluminiumsilikat nach Anspruch 1 oder 2, das einen Glühverlust bei 1000 °C von kleiner 0,2 Gew.-%, vorzugsweise von kleiner 0,1 Gew.-% aufweist.

4. Synthetisches Aluminiumsilikat gemäß einem oder mehreren der Ansprüche 1 bis 3, das
(a) eine ausgeglichene negative Oberflächenladung,
(b) eine spezifische Oberfläche (BET) von größer 1 m²/g,
(c) eine Korngröße D50 von kleiner 3,0 µm, vorzugsweise D50 von kleiner 2,5 µm,
(d) einen Gehalt an Fe₂O₃ kleiner 200 ppm und einen Gehalt an TiO₂ kleiner 30ppm,
und/oder
(e) einen Al₂O₃-Gehalt von mindestens 5 Gew.-%, vorzugsweise mindestens 10 Gew.-%
aufweist.

5. Synthetisches Aluminiumsilikat gemäß einem oder mehreren der Ansprüche 1 bis 4, das
(i) mikroskopisch eine kubische oder kugelförmige Erscheinung aufweist, und das aus synthetischen Zeolithen vom Typ A oder P erhältlich ist;
(ii) mikroskopisch eine Faser- oder Blattstruktur aufweist, und das aus Zeolithen mit Faser- oder Blattstruktur, insbesondere aus Heulandit, Mordenit, Eronit oder Offretit, erhältlich ist; oder
(iii) aus Zeolithen, die nicht zur Gruppe der Natrium-Zeolithe gehören, erhältlich ist.

6. Synthetisches Aluminiumsilikat gemäß Ansprüchen 1 bis 5, das eine Kationenaustauschkapazität zwischen 5 und 100 mval NH₄⁺ aufweist.

7. Verfahren zur Herstellung des synthetischen Aluminiumsilikats gemäß Ansprüchen 1 bis 6, umfassend
(a) vollständiges Calzinieren des Ausgangszeoliths bei Temperaturen größer 900 °C und
(b) Vermahlen des in Schritt (a) erhaltenen calzinierten Zeoliths auf Korngröße D50 von kleiner als 4,0 µm.

8. Verfahren gemäß Anspruch 7, wobei das vollständige Calzinieren in einem Temperaturbereich von größer 900 bis 1500 °C, vorzugsweise in einem Temperaturbereich von 950 °C bis 1250 °C, erfolgt und/oder die Dauer der Calzinierung wenigstens 3, vorzugsweise wenigstens 6 h beträgt.

9. Verfahren gemäß Anspruch 7 oder 8, wobei das Vermahlen naß oder trocken erfolgen kann.

10. Verfahren gemäß Ansprüchen 7 bis 9, wobei das Vermahlen der synthetischen Aluminiumsilikate als einzelne Komponente oder im Gemisch mit weiteren Stoffen erfolgt.

11. Verwendung eines synthetischen Aluminiumsilikats gemäß Ansprüchen 1 bis 6, als Verdickungsmittel, Stell- oder Thixotrophiermittel.

12. Verwendung gemäß Anspruch 11, wobei das synthetische Aluminiumsilikat als Stell- oder Verdickungsmittel für keramische Massen, Glasuren, Emails, Farben und Pasten eingesetzt wird.

13. Verwendung gemäß Anspruch 11 oder 12, wobei das synthetische Aluminiumsilikat zusammen mit einem Elektrolyten, ausgewählt aus Alkali- und Erdalkalisalzen, insbesondere Mg-Acetat, MgCl₂, Na-Aluminat, K₂CO₃, Ca-Acetat und/oder CaCl₂ eingesetzt wird.

14. Glasur- oder Emailschlicker, keramische Masse, Farbe oder Paste, enthaltend ein synthetisches Aluminiumsilikat gemäß Ansprüchen 1 bis 6.

15. Glasur- oder Emailschlicker, keramische Masse, Farbe oder Paste gemäß Anspruch 14, weiterhin enthaltend einen Elektrolyten, ausgewählt aus Alkali- und Erdalkalisalzen, insbesondere Mg-Acetat, MgCl₂, Na-Aluminat, K₂CO₃, Ca-Acetat und/oder CaCl₂.

## Claims

1. A synthetic aluminum silicate essentially having a carnegieite or nepheline structure and a grain size D50 of smaller than 4.0 µm, which has a cation-exchange capacity of at least 5 mval NH₄⁺.

2. The synthetic aluminum silicate according to claim 1, having a regular grain shape and a specific surface area (BET) of smaller than 10 m²/g, preferably smaller than 5.0 m²/g.

3. The synthetic aluminum silicate according to claim 1 or 2, having a loss on ignition at 1000 °C of lower than 0.2% by weight, preferably lower than 0.1% by weight.

4. The synthetic aluminum silicate according to one or more of claims 1 to 3, exhibiting:
(a) a compensated negative surface charge;
(b) a specific surface area (BET) of greater than 1 m²/g;
(c) a grain size D50 of smaller than 3.0 µm, preferably D50 of smaller than 2.5 µm;
(d) a content of Fe₂O₃ of smaller than 200 ppm and a content of TiO₂ of smaller than 30 ppm; and/or
(e) an Al₂O₃ content of at least 5% by weight, preferably at least 10% by weight.

5. The synthetic aluminum silicate according to one or more of claims 1 to 4, which
(i) has a cubic or spherical microscopic appearance and can be obtained from synthetic zeolites of type A or P;
(ii) has a microscopic fibrous or sheet structure and can be obtained from zeolites having a fibrous or sheet structure, especially from heulandite, mordenite, erionite or offretite; or
(iii) can be obtained from zeolites which do not belong to the class of sodium zeolites.

6. The synthetic aluminum silicate according to claims 1 to 5, which has a cation-exchange capacity of from 5 to 100 mval NH₄⁺.

7. A process for preparing the synthetic aluminum silicate according to claims 1 to 6, comprising
(a) complete calcination of the starting zeolites at temperatures of greater than 900 °C; and
(b) milling of the calcined zeolites obtained in step (a) to grain sizes D50 of smaller than 4.0 µm.

8. The process according to claim 7, wherein said complete calcination is effected within a temperature range of greater than 900 to 1500 °C, preferably within a temperature range of from 950 °C to 1250 °C, and/or the duration of the calcination is at least 3 h, preferably at least 6 h.

9. The process according to claim 7 or 8, wherein said milling may be wet or dry.

10. The process according to claims 7 to 9, wherein said milling is effected with the synthetic aluminum silicates as a sole component, or in admixture with further materials.

11. Use of a synthetic aluminum silicate according to claims 1 to 6 as thickeners, suspending or thixotropic agents.

12. The use according to claim 11, wherein said synthetic aluminum silicate is employed as a suspending agent or thickener for ceramic bodies, glazes, enamels, colors and pastes.

13. The use according to claim 11 or 12, wherein said synthetic aluminum silicate is employed together with an electrolyte selected from alkali and alkaline earth metal salts, especially Mg acetate, MgCl₂, Na aluminate, K₂CO₃, Ca acetate and/or CaCl₂.

14. A glaze or enamel slip, ceramic body, color or paste containing a synthetic aluminum silicate according to claims 1 to 6.

15. A glaze or enamel slip, ceramic body, color or paste according to claim 14, further containing an electrolyte selected from alkali and alkaline earth metal salts, especially Mg acetate, MgCl₂, Na aluminate, K₂CO₃, Ca acetate and/or CaCl₂.

## Revendications

1. Silicate d'aluminium synthétique, ayant une structure essentiellement de type carnégieite ou néphéline, ayant une taille de grain D50 inférieure à 4,5 *µ*m, présentant une capacité d'échange de cations d'au moins 5 mval NH₄⁺.

2. Silicate d'aluminium synthétique selon la revendication 1, présentant une forme de grain régulière et une surface spécifique (BET) inférieure à 10 m²/g, de préférence inférieure à 5,0 m²/g.

3. Silicate d'aluminium synthétique selon la revendication 1 ou 2, ayant une perte par calcination ou ignition à 1000°C inférieure à 0,2 % en poids, de préférence inférieure à 0,1 % en poids.

4. Silicate d'aluminium synthétique selon ou plusieurs des revendications 1 à 3, présentant
(a) une charge de surface négative équilibrée,
(b) une surface spécifique (BET) supérieure à 1 m²/g,
(c) une taille de grain D50 inférieure à 3,0 *µ*m, de préférence D50 inférieure à 2,5 *µ*m,
(d) une teneur en Fe₂O₃ inférieure à 200 ppm et une teneur en TiO₂ inférieure à 30 ppm,
et/ou
(e) une teneur en Al₂O₃ d'au moins 5 % en poids, de préférence d'au moins 10 % en poids.

5. Silicate d'aluminium synthétique selon ou plusieurs des revendications 1 à 4,
(i) présentant au microscope un aspect cubique ou sphérique, et obtenu à partir de zéolithes synthétiques de type A ou P ;
(ii) présentant au microscope une structure fibreuse ou lamellaire et obtenue à partir de zéolithes ayant une structure fibreuse ou lamellaire, en particulier obtenue à partir d'heulandite, de mordenite, éronite ou offretite ; ou
(iii) obtenue à partir de zéolithes n'appartenant pas au groupe des zéolithes de sodium.

6. Silicate d'aluminium synthétique selon les revendications 1 à 5, présentant une capacité d'échange de cations comprise entre 5 et 100 mval NH₄⁺.

7. Procédé de fabrication du silicate d'aluminium synthétique selon les revendications 1 à 6, comprenant :
(a) une calcination complète de la zéolithe initiale à des températures supérieures à 900°C, et
(b) un broyage de la zéolithe calcinée, obtenue à l'étape (a), pour obtenir une taille de grain D50 inférieure à 4,0 *µ*m.

8. Procédé selon la revendication 7, la calcination complète se faisant dans une fourchette de températures supérieure à 900°C et allant jusqu'à 1500°C, de préférence dans une fourchette de températures de 950°C à 1250°C et/ou la durée de la calcination étant d'au moins 3, de préférence d'au moins 6 h.

9. Procédé selon la revendication 7 ou 8, dans lequel le broyage peut s'effectuer par voie humide ou sèche.

10. Procédé selon les revendications 7 à 9, le broyage du silicate d'aluminium synthétique se faisant en tant que composant individuel ou en mélange avec d'autres substances.

11. utilisation d'un silicate d'aluminium synthétique selon les revendications 1 à 6, en tant qu'agent épaississant, agent stabilisateur ou de thixotropie.

12. Utilisation selon la revendication 11, le silicate d'aluminium synthétique étant utilisé en tant qu'agent stabilisateur ou épaississant, pour des masses céramiques, des glaçures, des émaux, des peintures et des pâtes.

13. Utilisation selon la revendication 11 ou 12, le silicate d'aluminium synthétique étant utilisé conjointement avec un électrolyte, sélectionné parmi des sels alcalins et alcalino-terreux, en particulier à acétate de Mg, MgCl₂, Aluminate de Na, K₂CO₃, acétate de Ca et/ou CaCl₂.

14. Barbotine de glaçure ou d'émail, masse céramique, peinture ou pâte, contenant un silicate d'aluminium synthétique selon les revendications 1 à 6.

15. Barbotine de glaçure ou d'émail, masse céramique, peinture ou pâte, selon la revendication 14, contenant en outre un électrolyte, sélectionné parmi des sels alcalins et alcalino-terreux, en particulier de l'acétate de Mg, MgCl₂ de l'aluminate de Na, K₂CO₃, de l"acétate de Ca et/ou CaCl₂.
